# EUROPÄISCHE PATENTSCHRIFT

(11) **EP 1 258 072 B1**
(45) Veröffentlichungstag und Bekanntmachung des Hinweises auf die Patenterteilung: **24.09.2003**
(21) Anmeldenummer: 01907520.9
(22) Anmeldetag: 10.02.2001
(51) Int. Cl.: H02K 3/40

(54) **ELEKTRISCHE ROTATIONSMASCHINE**
ELECTRIC ROTARY MACHINE
MACHINE TOURNANTE ELECTRIQUE

(30) Priorität: 25.02.2000 DE 10008803
(43) Veröffentlichungstag der Anmeldung: 20.11.2002
(73) Patentinhaber: Voith Siemens Hydro Power Generation GmbH & Co. KG, 89522 Heidenheim (DE)
(72) Erfinder: PEIER, Dirk, 44267 Dortmund (DE); TEMMEN, Katrin, 44396 Dortmund (DE)
(74) Vertreter: Dr. Weitzel & Partner
(86) Internationale Anmeldenummer: EP0101472
(87) Internationale Veröffentlichungsnummer: WO01063727

(56) Entgegenhaltungen:
- EP-A- 0 440 865
- EP-A- 0 959 551
- WO-A-97/45914

## Beschreibung

Die Erfindung betrifft eine elektrische Rotationsmaschine, insbesondere einen Hochspannungsgenerator, mit einem Stator, der einen Grundkörper und eine Statorwicklung mit einer Anzahl von im Grundkörper verlaufenden Hochspannungsleitern aufweist.

Eine konventionelle elektrische Rotationsmaschine, beispielsweise ein Turbogenerator für einen Einsatz im Bereich der Energieerzeugung ist für eine relativ geringe Spannung von 10-25kV ausgelegt. Die Rotationsmaschine, insbesondere Generator auf die sich die vorliegende Erfindung bezieht, ist demgegenüber für Hochspannung ausgelegt. Unter Hochspannung wird hierbei der Bereich von 30 KV bis zu mehreren 100 KV verstanden. Ein derartiger Hochspannungsgenerator ist insbesondere für die Netzspannung des Fernnetzes ausgelegt, also beispielsweise für 110 KV. Der entscheidende Vorteil des Hochspannungsgenerators ist darin zu sehen, dass er Strom unmittelbar in das Fernnetz einspeisen kann, ohne dass ein Transformator notwendig ist.

Der wesentliche Unterschied zwischen einem herkömmlichen Generator und einem Hochspannungsgenerator ist in der Auslegung ihrer Wicklungen zu sehen. Insbesondere betrifft dies die Ausbildung der einzelnen Leiter, die beim Hochspannungsgenerator als Hochspannungsleiter ausgebildet sind. Aufgrund der auftretenden sehr hohen Spannungen müssen die Hochspannungsleiter eine prinzipiell andere Isolierung als die Leiter beim herkömmlichen Generator aufweisen. Die Hochspannungsleiter ähneln insbesondere herkömmlichen Hochspannungskabeln und weisen beispielsweise ein Bündel von Leitersträngen auf, die von einer entsprechenden Isolierung, insbesondere eine Kunststoffisolierung, umgeben sind.

Aufgrund der hohen Spannungen erfordern Hochspannungsgeneratoren eine Neuauslegung im Hinblick auf elektrische/mechanische Randbedingungen sowie im Hinblick auf die Generatorkühlung.

In der WO 97/45934 und in der WO 97/45914 wird jeweils ein Hochspannungsgenerator beschrieben, dessen Stator eine Statorwicklung mit einer Anzahl von Hochspannungsleitern aufweist. Der Stator ist aus einzelnen zahnartigen Statorsegmenten gebildet, die sich jeweils in Längsrichtung des Generators erstrecken und eine in etwa trapezförmige Querschnittsfläche aufweisen. Die einzelnen Statorsegmente bilden einen Grundkörper des Stators. In diesem Grundkörper, insbesondere in jedem der Statorsegmente, ist eine Nut eingearbeitet, in der jeweils mehrere der Hochspannungsleiter angeordnet sind. Die Nut verläuft ebenso wie die Hochspannungsleiter in Längsrichtung des Generators und erstreckt sich in radialer Richtung in den Grundkörper des Stators hinein. Die einzelnen in einer Nut angeordneten Hochspannungsleiter bilden in radialer Richtung eine Reihe. Jede einzelne der Nuten weist eine komplexe Geometrie auf, bei der die Seitenwände der Nut aus zu den einzelnen Hochspannungsleitern korrespondierenden Auswölbungen gebildet sind. Im Querschnitt gesehen ist die Nutform vergleichbar mit der einer Fahrradkette.

Zur Kühlung des Stators ist gemäß der WO 97/45914 eine Anzahl von Kühlkanälen vorgesehen, die sich in Längsrichtung durch den Grundkörper erstrecken und zwischen den einzelnen Nuten angeordnet sind. In jeden dieser Kühlkanäle wird eine Kühlleitung eingebracht, die beim Betrieb von einem Kühlmittel durchströmt wird. Um einen guten thermischen Kontakt zum Grundkörper zu ermöglichen, ist hierbei notwendig, ein Füllmaterial zwischen der jeweiligen Kühlleitung und dem zugeordneten Kühlkanal einzubringen. Da zudem zwischen den Hochspannungsleitern und dem Grundkörper zumindest in Teilbereichen ein Luftspalt besteht, ist der Wärmetransport von den Hochspannungsleitern zu den Kühlkanälen erschwert.

Die WO 97/45934 befasst sich unter anderem mit der Isolierung der Hochspannungsleiter oder Hochspannungskabel. Deren Isolationshülle weist insbesondere einen speziellen Mehrschichtaufbau zur elektrischen Isolation auf. Zur Verstärkung der Isolationswirkung ist zusätzlich eine spezielle Innenauskleidung oder Beschichtung der Nut vorgesehen.

Der Erfindung liegt die Aufgabe zugrunde, eine elektrische Rotationsmaschine, insbesondere einen Hochspannungsgenerator, anzugeben, bei der ein sicherer und zuverlässiger Betrieb gewährleistet ist.

Die Aufgabe wird gemäß der Erfindung gelöst durch eine elektrische Rotationsmaschine, insbesondere ein Hochspannungsgenerator, mit einem Stator, der einen Grundkörper und eine Statorwicklung mit einer Anzahl von im Grundkörper verlaufenden Hochspannungsleitern aufweist, dadurch gekennzeichnet, daß zumindest einige der Hochspannungsleiter im Grundkörper mittels eines Einbettmaterials eingebettet sind und das Einbettmaterial pulverförming ist.

Dies hat den wesentlichen Vorteil, dass zwischen dem einzelnen Hochspannungsleiter und dem Grundkörper kein Luftspalt auftritt, welcher als thermischer Isolator wirkt. Mit Hilfe des Einbettmaterial ist daher ein guter Wärmeabtransport vom Hochspannungsleiter erzielt. Dadurch ist die Effektivität eines Kühlsystems erhöht.

Sind mehrere Hochspannungsleiter gemeinsam in einer Nut oder in einem Kanal im Grundkörper angebracht, so sorgt das Einbettmaterial in vorteilhafter Weise dafür, dass die Position der einzelnen Hochspannungsleiter zueinander fixiert ist. Es ist in diesem Fall also nicht notwendig, die Lagefixierung der Hochspannungsleiter über eine komplexe Geometrie der Nut zu verwirklichen.

In einer bevorzugten Ausführungsform weist das Einbettmaterial eine gute thermische Leitfähigkeit und/oder ein gutes elektrisches Isolationsvermögen auf. Eine gute thermische Leitfähigkeit sorgt für eine effektive Kühlung und das elektrische Isolationsvermögen verhindert beispielsweise das Auftreten von elektrischen Überschlägen zwischen den einzelnen Hochspannungsleitern. Vorzugsweise erfüllt das Einbettmaterial diese beiden Eigenschaften in Kombination, so dass in einfacher Weise die Vorteile einer hohen thermischen Leitfähigkeit, einer guten elektrischen Isolierung und einer Lagefixierung der Hochspannungsleiter verwirklicht ist.

Für eine einfache Handhabung ist in einer bevorzugten Ausgestaltung das Einbettmaterial pulverförmig. Damit ist gewährleistet, dass die Hohlräume zwischen dem Hochspannungsleiter und dem Grundkörper weitgehend vollständig mit dem Einbettmaterial ausgefüllt sind.

Bevorzugt ist das Einbettmaterial ein keramisches Pulver mit guter thermischer Leitfähigkeit und/oder mit einem guten elektrischen Isolationsvermögen, da keramische Pulver sich insbesondere im Hinblick auf das elektrische Isolationsvermögen sehr gut eignen.

Als keramisches Pulver wird vorzugsweise Aluminiumoxid verwendet, welches sowohl ein guter thermischer Leiter als auch ein guter elektrischer Isolator und zugleich kostengünstig ist. Als weitere Pulver werden bevorzugt auch Aluminiumnitrid, Bornitrid oder Magnesiumoxid oder eine Mischung dieser Pulver untereinander herangezogen. Beispielsweise wird als bevorzugtes keramisches Pulver eine Mischung aus Aluminiumnitrid und Aluminiumoxid verwendet.

Zweckdienlicherweise sind mehrere der Hochspannungsleiter gemeinsam mit einem sich in Längsrichtung durch den Grundkörper verlaufenden Kanal in radialer Richtung nebeneinander angeordhet, wodurch ein vergleichsweise einfacher Aufbau des Stators ermöglicht ist.

Zweckdienlicherweise ist der Kanal dabei von ebenen Seitenwänden begrenzt und weist insbesondere eine rechteckige Querschnittsfläche auf. Dies ist zum einen herstellungstechnisch sehr einfach zu verwirklichen und andererseits wirkt sich die weitgehend glatte Außenkontur des Kanals ohne Wölbungen und Spitzen positiv auf die beim Generatorbetrieb auftretenden magnetischen und elektrischen Felder aus.

Ein Ausführungsbeispiel der Erfindung wird im Folgenden anhand der Zeichnungen näher erläutert. Es zeigen jeweils in stark vereinfachten Darstellungen:
- FIG 1: einen Ausschnitt aus einem Querschnitt durch einen Generator und
- FIG 2: einen ausschnittsweise dargestellten Kanal in einem Grundkörper eines Stators, in dem mehrere Hochspannungsleiter mittels eines Einbettmaterials eingebettet sind.

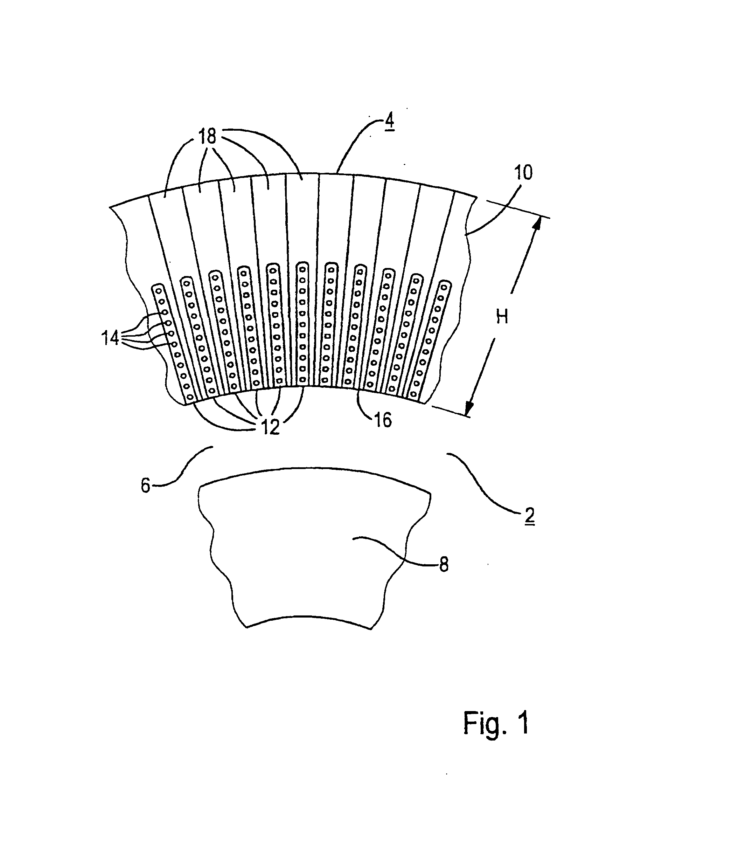

Gemäß der ausschnittsweisen, segmentartigen Darstellung eines Querschnitts durch einen als Hochspannungsgenerator ausgebildeten Generator 2 nach FIG 1 weist der Generator 2 einen Stator 4 auf, der unter Bildung eines Luftspaltes 6 einen Rotor 8 kreisringartig umgibt. Der Stator 4 umfasst einen Grundkörper 10, in den sich mehrere Kanäle 12 erstrecken. In den einzelnen Kanälen 12 verlaufen jeweils mehrere Hochspannungsleiter 14 mit rundem Querschnitt, die im jeweiligen Kanal 12 nebeneinander angeordnet sind und eine Reihe bilden. Die Kanäle 12 verlaufen in Axial- oder Längsrichtung des Generators 2 und erstrecken sich zugleich in radialer Richtung in den Grundkörper 10 hinein. Sie erstrecken sich hierbei beginnend von der rotorseitigen Innenseite 16 des Stators 4 in diesen bis zu etwa 2/3 der Statorhöhe H hinein.

Der Grundkörper 10 ist von einzelnen zahnartigen Statorsegmenten 18 gebildet, die jeweils ein in etwa trapezförmiges Querschnittsprofil haben und sich in Längsrichtung des Generators 2 erstrecken. Die einzelnen Statorsegmente 18 bilden den zylinderförmigen Grundkörper 10.

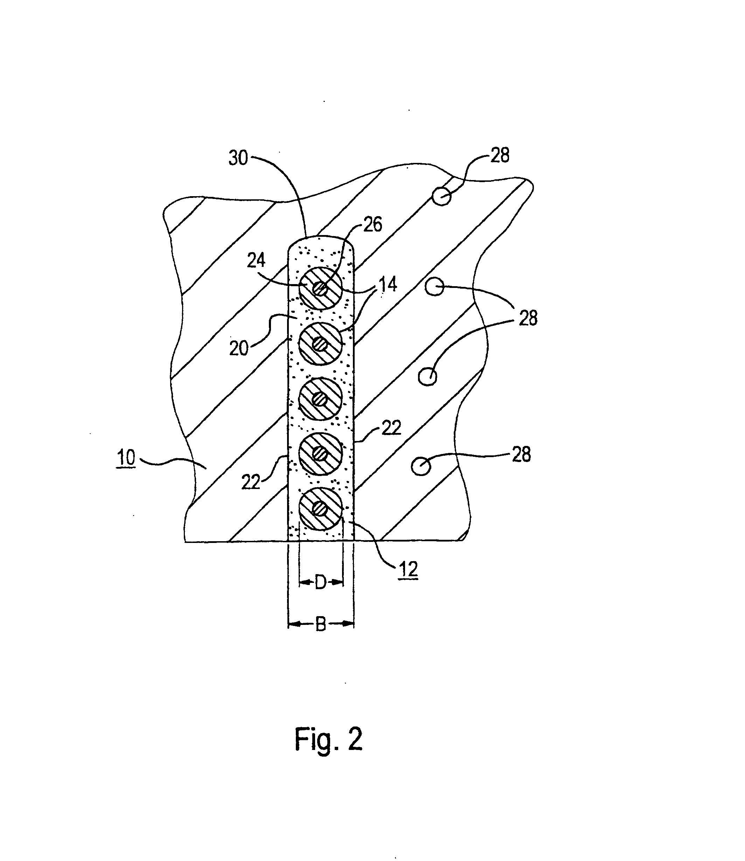

Wie anhand eines vergrößert dargestellten Kanals aus FIG 2 zu entnehmen ist, sind die Hochspannungsleiter 14 in den einzelnen Kanälen 12 jeweils von einem pulverförmigen Einbettmaterial 20 umgeben, welches die zwischen den Hochspannungsleitern 14 und dem Kanal 12 verbleibenden Hohlräume vollständig ausfüllt. Das Einbettmaterial 20 ist vorzugsweise ein Aluminiumoxid-Pulver oder eine Mischung aus einem Aluminiumoxidund einem Aluminiumnitrid-Pulver. Auch Bornitrid oder Magnesiumoxid können als Einbettmaterial 20 herangezogen werden.

Das pulverförmige Einbettmaterial 20 ermöglicht in einfacher Weise die einzelnen Hochspannungsleiter 14 im Kanal 12 anzuordnen. Das Einbettmaterial 20 sorgt hierbei dafür, dass die einzelnen Leiter 14 sowohl vom Grundkörper 10, also von den Seitenwänden 22 des Kanals 12, und zugleich voneinander beabstandet sind. Insbesondere wird dadurch ein gleichmäßigerer Abstand untereinander sowie zum Grundkörper 10 erreicht. Dies ist insbesondere im Hinblick auf möglichst homogen und gleichmäßig verlaufende elektrische und/oder magnetische Felder von Vorteil.

Zudem ist durch die gleichmäßige Beabstandung der einzelnen Hochspannungsleiter 14 die Gefahr von Schädigungen aufgrund überhöhter Potenzialdifferenzen zwischen den Hochspannungsleitern 14 untereinander und zwischen ihnen und dem Grundkörper 10 gering. Zu hohe Potentialunterschiede führen unter Umständen zu Überschlägen, die die Isolationswirkung beeinträchtigen.

Das pulverförmige Einbettmaterial 20 verbessert somit die Isolation der einzelnen Hochspannungsleiter 14 zueinander und zum Grundkörper 10. Die Hochspannungsleiter 14 weisen zu Isolationszwecken bereits eine Isolierhülle 24 auf, die den eigentlichen Leiterkern 26 umgibt. Die Isolierhülle 24 besteht vorzugsweise aus einem Isolationsmaterial, beispielsweise Kunststoff, wie es bei herkömmlichen Hochspannungskabeln verwendet wird.

Neben der isolierenden Funktion bewirkt das Einbettmaterial 20 darüber hinaus auch eine gute thermische Ankopplung der Hochspannungsleiter 14 an den Grundkörper 10, welcher mittels eines Kühlmittels, das durch Kühlkanäle 28 geführt wird, gekühlt wird. Die Kühlmittelkanäle 28 sind im Grundkörper 10 vorzugsweise zwischen den Kanälen 12 angeordnet und verlaufen in Längsrichtung des Generators 2. Als Kühlmittel wird ein Kühlgas, wie beispielsweise Luft oder Wasserstoff oder auch eine Kühlflüssigkeit, wie beispielsweise Öl, herangezogen. Bei Turbogeneratoren hoher Leistung wird aufgrund der guten Kühlleistung üblicherweise Wasserstoff als Kühlmittel verwendet.

Da die einzelnen Hochspannungsleiter 14 mittels des Einbettmaterials 20 in ihrer Lage im Kanal 12 fest positioniert sind, braucht dieser keine Halte- oder Stützfunktion für die Hochspannungsleiter 14 zu übernehmen. Er ist daher vorzugsweise entsprechend einfach ausgestaltet, und zwar - wie dargestellt - insbesondere mit einem rechteckförmigen Querschnitt. Damit ist ein im Wesentlichen glatter Verlauf der Seitenwände 22 ermöglicht, was im Hinblick auf elektrische und/oder magnetische Eigenschaften vorteilhaft ist. Vorzugsweise ist der Kanal 12 an seinem im Stator 4 gelegenen stirnseitigen Ende 30 gerundet.

Gemäß FIG 2 übertrifft die Breite B des Kanals 12 den Durchmesser D der Hochspannungsleiter 14. Damit ist gewährleistet, dass zwischen den Hochspannungsleitern 14 und dem Kanal 12 eine zusätzliche vom Einbettmaterial 20 gebildete elektrische Isolationsschicht vorhanden ist. Bei ausreichender Isolation des Leiterkerns 26 über die Isolierhülle 24 kann die Breite B des Kanals 12 an den Durchmesser D angepasst sein, so dass die Hochspannungsleiter 14 an den Seitenwänden 22 anliegen.

Beim Einbringen der Hochspannungsleiter 14 in die Kanäle 12 wird beispielsweise derart vorgegangen, dass die einzelnen Hochspannungsleiter 14 und das Einbettmaterial 20 abwechselnd in den Kanal 12 eingebracht werden, um eine gleichmäßige Beabstandung der einzelnen Hochspannungsleiter voneinander zu erzielen. Das pulverförmige Einbettmaterial wird vorzugsweise durch Schütteln oder Rütteln verdichtet. Aufgrund der Unterteilung des Grundkörpers 10 in einzelne Statorsegmente 18 ist ein derartiges Vorgehen ohne Probleme zu verwirklichen.

## Patentansprüche

1. Elektrische Rotationsmaschine (2), insbesondere Hochspannungsgenerator, mit einem Stator (4), der einen Grundkörper (10) und eine Statorwicklung mit einer Anzahl von im Grundkörper (10) verlaufenden Hochspannungsleitern (14) aufweist, **dadurch gekennzeichnet, dass** zumindest einige der Hochspannungsleiter (14) im Grundkörper (10) mittels eines Einbettmaterials (20) eingebettet sind und das Einbettmaterial (20) pulverförmig ist.

2. Maschine (2) nach Anspruch 1, **dadurch gekennzeichnet, dass** das Einbettmaterial (20) eine gute thermische Leitfähigkeit und/oder ein gutes elektrisches Isolationsvermögen aufweist.

3. Maschine (2) nach einem der Ansprüche 1 oder 2, **dadurch gekennzeichnet**, das s das Einbettmaterial (20) ein keramisches Pulver mit guter thermischer Leitfähigkeit und/oder mit einem guten elektrischen Isolationsvermögen ist.

4. Maschine (2) nach Anspruch 3, **dadurch gekennzeichnet, dass** das keramische Pulver zumindest eine der Komponenten Aluminiumoxid, Aluminiumnitrid, Bornitrid oder Magnesiumoxid aufweist.

5. Maschine (2) nach einem der vorhergehenden Ansprüche, **dadurch gekennzeichnet, dass** mehrere der Hochspannungsleiter (14) gemeinsam in einem in Längsrichtung durch den Grundkörper (10) verlaufenden Kanal (12) in radialer Richtung nebeneinander angeordnet sind.

6. Maschine (2) nach Anspruch 6, **dadurch gekennzeichnet, dass** der Kanal (12) von ebenen Seitenwänden (22) begrenzt ist und insbesondere eine rechteckige Querschnittsfläche aufweist.

## Claims

1. An electric rotary machine (2), especially a high-voltage generator, with a stator (4) comprising a basic body (10) and a stator winding with a number of high-voltage conductors (14) extending in the basic body (10), **characterized in that** at least a number of the high-voltage conductors (14) are embedded in the basic body (10) by means of an embedding material (20) and that the embedding material (20) is powdery.

2. A machine (2) as claimed in claim 1, **characterized in that** the embedding material (20) has a favorable thermal conductibility and/or a favorable electric insulation capacity.

3. A machine (2) as claimed in one of the claims 1 or 2, **characterized in that** the embedding material (20) is a ceramic powder with a favorable thermal conductibility and/or a favorable electric insulation capacity.

4. A machine (2) as claimed in claim 3, **characterized in that** the ceramic powder comprises at least one of the components of aluminum oxide, aluminum nitride, boron nitride or magnesium oxide.

5. A machine (2) as claimed in one of the preceding claims, **characterized in that** several of the high-voltage conductors (14) are arranged jointly adjacent to one another in the radial direction in a conduit (12) extending in the longitudinal direction through the basic body (10).

6. A machine (2) as claimed in claim 6, **characterized in that** the conduit (12) is delimited by planar side walls (22) and in particular has a rectangular cross-sectional surface.

## Revendications

1. Machine électrique tournante (2), notamment générateur haute tension, avec un stator (4) comportant un corps de stator (10) et un enroulement statorique avec un nombre de fils haute tension (14) posés dans le corps de stator (10), **caractérisée en ce que** quelques-uns au moins des fils haute tension (14) sont encastrés dans le corps de stator (10) au moyen d'un matériau d'encastrement (20) et que le matériau d'encastrement (20) est pulvérulent.

2. Machine (2) selon la revendication 1, **caractérisée en ce que** le matériau d'encastrement (20) présente une bonne conductivité thermique et/ou une forte capacité d'isolation électrique.

3. Machine (2) selon l'une quelconque des revendications 1 ou 2, caractér isée en ce que le matériau d'encastrement (20) est une poudre céramique présentant une bonne conductivité thermique et/ou une forte capacité d'isolation électrique.

4. Machine (2) selon la revendication 3, **caractérisée en ce que** la poudre céramique comporte au moins un des composants choisis parmi l'oxyde d'aluminium, le nitrure d'aluminium, le nitrure de bore ou l'oxyde de magnésium.

5. Machine (2) selon l'une quelconque des revendications précédentes, caractérisée en ce que plusieurs fils haute tension (14) sont posés côte à côte suivant la direction radiale dans un même canal (12) traversant le corps de stator (10) dans le sens de la longueur.

6. Machine (2) selon la revendication 6, **caractérisée en ce que** le canal (12) est défini par des parois latérales planes (22) et présente notamment une section transversale rectangulaire.
